# EUROPEAN PATENT SPECIFICATION

(11) **EP 3 179 691 B1**
(45) Date of publication and mention of the grant of the patent: **03.03.2021**
(21) Application number: 16165584.0
(22) Date of filing: 15.04.2016
(51) Int. Cl.: H04L 29/06, H04L 12/24

(54) **CONFIGURING A NETWORK SECURITY ENTITY**
KONFIGURATION EINER NETZWERKSICHERHEITSEINHEIT
CONFIGURATION D'UNE ENTITÉ DE SÉCURITÉ DE RÉSEAU

(30) Priority: 10.12.2015 FI 20155939
(43) Date of publication of application: 14.06.2017
(73) Proprietor: Airbus Defence and Space Oy, 00380 Helsinki (FI)
(72) Inventor: Väisänen, Mika, 00380 Helsinki (FI)
(74) Representative: Kolster Oy Ab

(56) References cited:
- US-A1- 2010 142 528
- US-A1- 2015 229 608
- "3rd Generation Partnership Project; Technical Specification Group Services and System Aspects; Policy and charging control architecture (Release 13)", 3GPP STANDARD; 3GPP TS 23.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V13.5.1, 25 September 2015 (2015-09-25), pages 1-243, XP050996313, [retrieved on 2015-09-25]

## Description

### FIELD

The invention relates to telecommunications network and especially to configuration of a network security entity that monitors network activities for malicious activity.

### BACKGROUND

Telecommunications networks may vary greatly in terms of sizing. A small network may be provided by couple of base stations and an exchange, whereas a nationwide network may require thousands of base stations and plurality of exchanges. Regardless of the size, in managed networks, security of a network is tried to be ensured. For example, network elements may be connected using isolated Internet Protocol (IP) networks. Additional security may be provided by use of virtual private networks between the network elements. A still further layer of security, for example against a fake base station or malfunctioning network element in a virtual private network, may be added by taking into use one or more network security entities, such as firewalls and/or intrusion detection/prevention system (IDPS) devices, that at least monitor network traffic to detect malicious traffic. Such network security entities have to have as part of their configuration a set of traffic rules that reflects the current network equipment properly.

3rd Generation Partnership Project (3GPP) Technical Specification TS 23.203 "Group Services and System Aspects; Policy and charging control architecture", Release 13, version 13.5.1, published September 2015, specifies the Policy and Charging Control functionality for unicast bearers in Evolved 3GPP Packet Switched domain, including both 3GPP accesses (GERAN/UTRAN/E-UTRAN) and Non-3GPP accesses. The specified high level functions for IP CANs (e.g. GPRS, Fixed Broadband, etc.) are Flow Based Charging for network usage, including charging control and online credit control, for service data flows and application traffic and Policy control (e.g. gating control, QoS control, QoS signalling, etc.).

US 2015/0229608 discloses configuration methods that use preconfigured parameters and authentication when the remote network node is integrated into a telecommunications system comprising firewalls.

US 2010/142528 discloses a solution in which a function is used for determining independently in one or more user stations or a switching and management infrastructure service access point identifiers for data transmissions of the packet data service.

### SUMMARY

An object of the present invention is to provide a configuration mechanism to define a set of traffic rules for a network security entity. The object of the invention is achieved by a method, an apparatus, a system and a computer program product as provided by the independent claims. The preferred embodiments of the invention are disclosed in the dependent claims. Examples and exemplary functionalities in the description which are not covered by the claims are useful for understanding the invention.

An aspect provides a solution in which network configuration stored to a system is utilized when one or more sets of traffic rules for one or more security entities are created, or defined.

### BRIEF DESCRIPTION OF THE DRAWINGS

In the following, examples will be described in greater detail with reference to accompanying drawings, in which
Figures 1A and 1B show simplified architecture of exemplary systems having schematic block diagrams of exemplary apparatuses;
Figures 2 and 3 illustrate exemplary information exchange;
Figure 4 shows a simplified architecture of another exemplary system having a schematic block diagram of an exemplary apparatus;
Figures 5, 6 and 7 are flow charts illustrating exemplary functionalities; and
Figure 8 is a schematic block diagram of an exemplary apparatus.

### DETAILED DESCRIPTION OF SOME EXAMPLES

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any managed network/system and its apparatuses. A managed network is a reconfigurable network in which network infrastructure is set up, configured and managed in a centralized manner. In other words, a managed network relies on pre-configured infrastructure in which network nodes/elements cannot join the network "on a fly". The pre-configured means that a network element is first configured to be part of the network, and once the configuration has been forwarded to other network elements involved, the network element can join the network. In other words, the managed network is an opposite of an ad-hoc network. The managed network may be a wireless network or a network utilizing both fixed connections and wireless connections, or a system comprising one or more managed networks.

The specifications of different systems, especially when wireless communication is utilized, develop rapidly. Such development may require extra changes to an embodiment. A current trend is to abstract the actual physical structure and to provide communication functionality in networks as software as an on-demand service. An abstraction may be a representation of an entity that is selected in terms of particular criteria or characteristics, while other characteristics irrelevant to the selection criteria are hidden or summarized. For the abstraction the future networks may utilize software defined networking (SDN) and/or network functions virtualization (NVF) architecture. The software defined networking provides software programmatic interfaces into network equipment and/or decouples a network control plane that for example selects a destination to which network traffic is to be sent from a network forwarding plane that for example forwards the network traffic to the selected destination. The network functions virtualization architecture includes virtualized network functions (VNF). A virtualized network function is defined as a network function that runs in one or more virtual machines on top of a networking infrastructure that may include routers, switches, storage, servers, cloud computing systems, etc. These new network architectures may change the way networks are being constructed and managed. For example, one or more of the below described network element functionalities may be migrated to any corresponding abstraction or apparatus. Therefore, all words and expressions should be interpreted broadly and they are intended to illustrate, not to restrict, the embodiment.

In the following different examples are described using Terrestrial Trunked Radio Access (TETRA) network without restricting the examples and embodiments thereto. Other possible network solutions include TETRAPOL, DMR (digital mobile radio) systems, a PAMR network (Public Access Mobile Radio), and a 3^{rd}, 4^{th}, or 5^{th} or beyond, generation mobile network, like LTE (Long Term Evolution), WiMAX (Worldwide Interoperability for Microwave Access), GoTa (Global Open Trunking Architecture), and heterogeneous networks combining, for example, TETRA and WLAN (Wireless Local Area Network), like WiFi -based networks. It should be appreciated that the above list is not an exhaustive list.

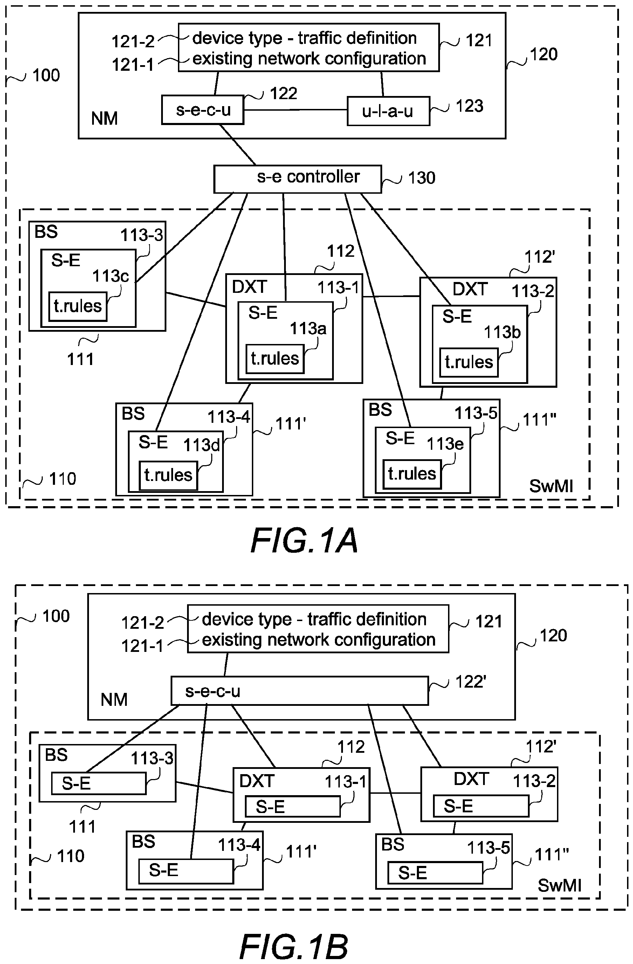

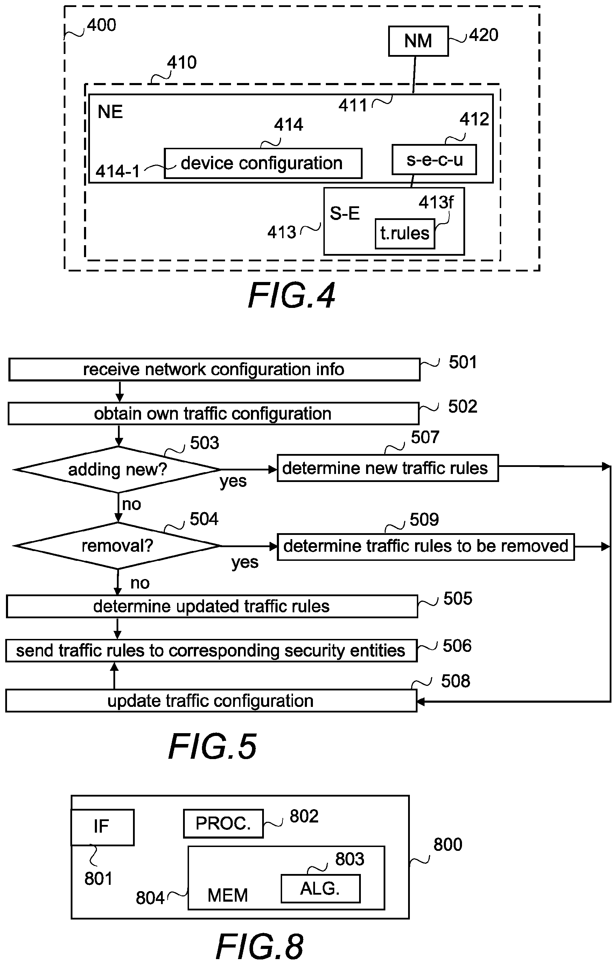

General architectures of communication systems according to examples based on TETRA are illustrated in Figures 1A, 1B and 4. Figures 1A, 1B and 4 are simplified system architectures only showing some network nodes and functional entities, all being logical units whose implementation may differ from what is shown. The connections shown in Figures 1A, 1B and 4 are logical connections; the actual physical connections may be different. It is apparent to a person skilled in the art that the systems also comprise other functions and structures used in or for communication in TETRA. They are irrelevant to the actual invention. Therefore, they need not to be discussed in more detail here. As can be seen from Figures 1 and 4, the network nodes, called below network elements, are easily mapped to other communication systems, and hence implementing the disclosed embodiments and examples to another kind of a network is a straightforward solution for one skilled in the art.

In the example illustrated in Figure 1A, the TETRA system 100 comprises a switching and management infrastructure (SwMI) 110, a network management system (NMS) 120 and one or more security entity controllers (S-E Controller) 130.

SwMI 110 is equipment for a voice plus data (V+D) network, which enables the user apparatuses/terminal devices (none illustrated in Figure 1) to communicate with each other. In other words, SwMI includes all equipment and means, which enable users to communicate with each other via the TETRA network. In the example of Figure 1, SwMI 110 comprises two types of network nodes, called below network elements: base stations (BS), each on a corresponding site 111, 111', 111", for providing wireless access to user apparatuses, and digital exchanges (DXT), each on a corresponding site 112, 112', for taking care of switching within a network and to/from other networks. In other words, the base stations may be seen as access nodes and the digital exchanges as switching servers. A connection between two sites may be over one or more packet switched backbone networks using Internet Protocol (IP), for example. To provide security, the backbone network may be an isolated IP network, and encrypted virtual private networks may be established between sites. However, the exact physical configuration and connections of the SwMI are not, as such, relevant to the invention, and therefore there is no need to describe them in more detail herein.

Further, in the illustrated example each site comprises, as an additional layer for security, one or more network security entities (S-E) 113-1, 113-2, 113-3, 113-4, 113-5, each with its own set of traffic rules (t.rules) 113a, 113b, 113c, 113d, 113e to determine how to handle different traffic flows. A network security entity may be any node or device configured to at least monitor network traffic to detect malicious traffic. Examples of different security entities include an intrusion detection/prevention system device, a passive intrusion detection system device, an active intrusion detection system device, an intrusion prevention system device, a software defined networking router, a general firewall, an application layer firewall node, a transport layer firewall node, and a network layer firewall node. As said above, one site may comprise more than one network security entity, for example an intrusion detection/prevention system device and an application layer firewall node. It should be appreciated that any known or future network security entity may be used; the details and the actual implementation of a security entity are irrelevant for the invention, the invention merely provides means to set and/or update traffic rules, as will be described below in more detail. For example, the traffic rules may be set or updated via a configuration interface of the security entity that provides an abstraction level to input traffic rules, as is known by one skilled in the art. The traffic rules may be called traffic profiles or network security configurations or site security configurations.

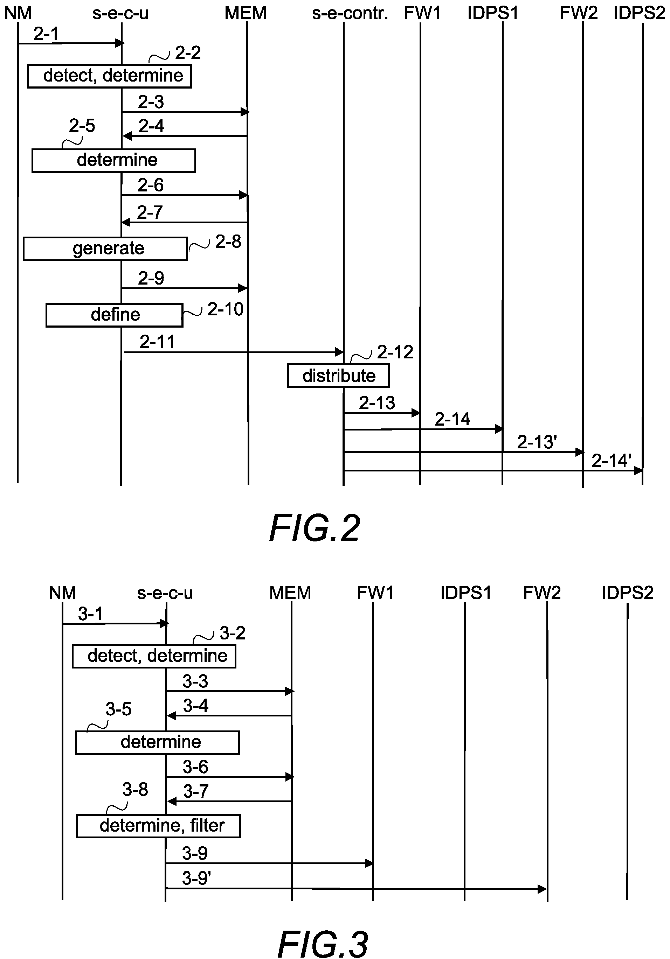

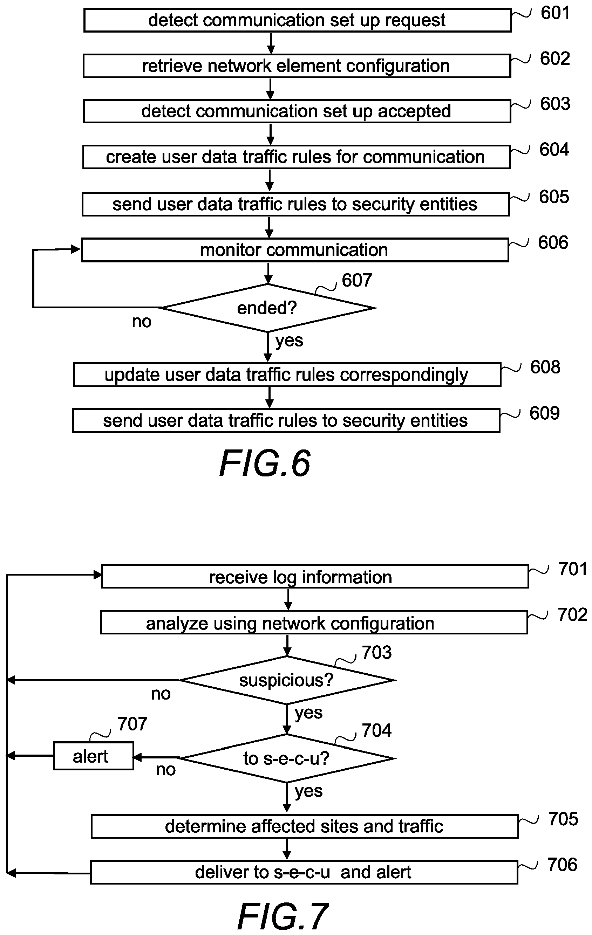

The network management system (NMS) is a management platform that may be a single management terminal, or a more complex system having one or more central management terminals and one or more local management terminals. However, herein it is described as one entity for the sake of clarity. The network management system enables the configuration and management of the TETRA system, and monitoring network nodes, also called as network elements and network devices, such as the base stations and digital exchanges. The configuration management tool in the network management system provides means to a user to configure the network and the network elements, and allows baselining of current configurations and archiving of network configurations. The above described functionality is provided in TETRA systems by a network manager, or a network manager terminal, also called a network manager device. Further, in the example illustrated in Figure 1A, the network management system is configured to define, or at least assists to define, traffic rules and/or updates to traffic rules to the security entities in sites. For that purpose, the network management system in the illustrated example of Figure 1A comprises a security entity configuration unit (s-e-c-u) 122, an updated log analyzer unit (u-l-a-u) 123, and in a memory 121, in addition to current network configurations 121-1, device type - specific traffic related configurations 121-2. The device type -specific traffic related configuration may define one or more of the following parameters: usable protocols, allowed packet sizes for traffic flows, and bandwidth characteristics for traffic flows. Use of the traffic bandwidth and packet sizes facilitates noticing misbehaving network elements and denials of service attacks. The current network configuration may contain device-specifically as a basic network configuration, a name of the device, its identification information, called herein identifier, one or more IP addresses of the device, device type (if not indicated by the name and/the identification information), one or more ports to be used with various traffic flows and naturally information on communication counterparts, i.e. devices the device is connected to, possible a more detailed counterpart configuration of a connection to a counterpart, and information on security entities for the device. The information on the counterpart may be its IP address and/or its identifier. The basic network configuration for a device is the configuration that needs to be inputted to NMS when the device is added to the network. In addition to the basic network configuration, the current network configuration, called below also mere network element configuration, may comprise configuration information that is generated by the security entity configuration unit 122, for example, using the device type -specific traffic related configurations 121-2, as will be described below. That part of the current network configuration may be called automatic network configuration, or update to the network configuration, or automatically generated network configuration. The security entity configuration unit is configured to use the network configuration information in the memory for traffic rules, as will be described below, for example with Figures 2, 3 and 6. Further, the updated log analyzer unit may be configured to use the network configuration information, as will be described below with Figure 7.

In the example illustrated in Figure 1A, the security entity configuration unit 122 is connected to a separate security entity controller unit (s-e-controller) 130 to deliver, or to distribute, the traffic rules to corresponding network security entities. Naturally the system may comprise more than one security entity controller unit, and a security entity controller unit may be part of the network management system or belong to SwMI or locate between them.

Further, depending on an implementation, the security entity controller unit and/or the updated log analyzer unit may be left out. Figure 1B illustrates a solution in which both the security entity controller unit and the updated log analyzer unit has been left out. In other words, in the solution illustrated in Figure 1B the security entity configuration unit 122' comprises a direct interface to the security entities and no updated log analyzer unit is deployed; otherwise the solutions are similar and descriptions of different elements is not repeated herein in vain.

To summon up, when a centralized approach is implemented, in the network management system there may be one or more security entity configuration units, zero or more updated log analyzer units, and zero or more centralized security entity controller unit. The traffic rules in security entities may be updated either via a direct interface or via a centralized security entity controller unit.

Figure 2 illustrates an exemplary information exchange according to an exemplary embodiment. In the illustrated example it is assumed that network configuration information received from the network manager comprises an indication of a nature of the configuration and for a network element its network identifier and at least one parameter, and that the security entity configuration unit is configured to determine the usable protocols, allowed packet sizes for traffic flows, and bandwidth characteristics for traffic flows, if needed, and to update network element configuration correspondingly. If the configuration is adding a network element, the network configuration information received from the network manager preferably comprises for a network element the basic network configuration, described above. Naturally, other parameters may be defined to be part of the basic network configuration. If the configuration is removing a network element, the network configuration information received from the network manager comprises for a network element, in addition to the network identifier, at least its counterparts. If the configuration is an update to a parameter, the network configuration information received from the network manager comprises for a network element, in addition to the network identifier, at least the updated value for the parameter.

In the illustrated example the network manager NM forwards in message 2-1 an update to network configuration to the security entity configuration unit (s-e-c-u). As said above, the update may be adding a new network element, removing an existing network element, or updating parameters of an existing network element. The update, i.e. corresponding information, is also forwarded to corresponding network elements but that information exchange is not illustrated in Figure 2. In the illustrated example it is assumed that the update is adding a base station with an identifier BS-n to the network under a digital exchange DXT-3, with IP address x.x.x, the base station is of type B-type 3 (i.e. its name is B-type 3), security entities are a firewall FW2 and an intrusion detection/prevention system device IDPS2, and ports to be used between DXT-3 and BS-n are p1 in DXT-3 and p2 in BS-n.

The security entity configuration unit detects in point 2-2 from message 2-1 that one or more new network elements have been added, and determines in point 2-2 those network elements that have been added and their types. In the illustrated example, BS-n and its type B-type 3 are determined in point 2-2. Then device type -specific traffic related configurations are retrieved (messages 2-3, 2-4) from the memory. In the illustrated example, message 2-3 indicates B-type 3 and message 2-4 contains usable protocols, allowed packet sizes for traffic flows, and bandwidth characteristics for traffic flows that are defined for B-type 3. The security entity configuration unit is further configured to determine in point 2-5 from the received information the counterparts of the network added elements, and retrieves (messages 2-6, 2-7) from the memory network element configurations of the counterparts that were not also indicated as added network elements in message 2-2. In the illustrated example DXT-3 is determined in step 2-5, identified in message 2-6, and the network element configuration of the DXT-3 is received in message 2-7.

The security entity configuration unit uses the retrieved information to define, or create or generate, in point 2-8, automatic network element configuration for those network elements, and stores (message 2-9), or more precisely adds, the automatically generated network element configuration to the memory to be part of the current network element configuration. In the illustrated example, after the storing/adding the automatically generated configuration part(s) the current network element configuration contains for BS-n: BS-n, B-type 3, x.x.x, p2 to DXT3, FW2, IDPS2, DXT3 from p1, and the traffic flow parameters received in message 2-4 for traffic flows to/from port p2, for example. Naturally BS-n is added to be counterpart to DXT-3, and the traffic flow related configurations for the port p1 are added/stored to be part of the current network element configuration of DXT-3.

Further, the security entity configuration unit defines in point 2-10 one or more sets of traffic rules for traffic between the network elements, using the current network element configurations (after updating them with the automatically generated network element configurations created in point 2-8), a set of traffic rules for each involved security entity, and forwards the sets of traffic rules to the security entity controller (s-e-contr.) in message 2-11. In the illustrated example DXT-3 site comprises a firewall FW1 and an intrusion detection/prevention system device IDPS 1, and BS-n site comprises FW2 and IDPS 2. Therefore a set of traffic rules is defined for FW1, another set of traffic rules for IDPS 1, yet another set of traffic rules for FW2, and a further set of traffic rules for IDPS2. The sets of traffic rules may comprise same traffic rules, or the security entity configuration may be configured to create security entity -specific rules and/or security entity type -specific rules. For example, a security entity filtering or blocking traffic may be provided with different set of traffic rules than a security entity simply monitoring and sending alarms. For example, a set of traffic rules for the filtering/blocking security entity may be more detailed than a set of traffic rules for the monitoring and alarming security entity. Further, it should be appreciated that a set of traffic rules may comprise one or more traffic rules, the upper limit being not restricted. Typically a set of traffic rules comprises a plurality of traffic rules.

The security entity controller then distributes (delivers) in point 2-12 the sets of traffic rules in messages 2-13, 2-13', 2-14, 2-14' to corresponding recipients, a message containing a set of traffic rules. Depending on an implementation, the security entity controller, in addition to have a more precise information on addresses of the security entities, also information based on which the security entity controller, in response to receiving a set of rules to be distributed, is configured to determine from the content, for example, to which security entities the received set of rules is to be distributed. Once receiving the set of traffic rules, a security entity updates its security configuration correspondingly.

Figure 3 illustrates an exemplary information exchange according to an exemplary embodiment in which no security element controller is implemented.

In the illustrated example the network manager NM forwards in message 3-1 an update to network configuration to the security entity configuration unit (s-e-c-u). The update may be adding a new network element, removing an existing network element, or updating parameters of an existing network element. The update, or corresponding information, is also forwarded to corresponding network elements but that information exchange is not illustrated in Figure 3. In the illustrated example it is assumed that the procedure described above with Figure 2 has been performed earlier, naturally without the security entity controller (i.e. messages 2-13, 2-14, 2-13', 2-14 originating from the security entity configuration unit, and no message 2-11 is forwarded and no point 2-12 performed), and that message 3-1 contains information that the IP address of the BS-n has been changed to x.y.z.

The security entity configuration unit detects in point 3-2 from message 3-1 that one or more parameters have been updated and determines in point 3-2 from the received information the network elements whose parameters have been changed, and retrieves (messages 3-3, 3-4) from the memory the current network element configuration of the network elements determined in point 3-2. In the illustrated example BS-n is determined in point 3-2, message 3-3 indicates BS-n, and the current network element configuration of BS-n comprising in addition to the basic network configuration also the automatically generated network configuration, is received in message 3-4.

The received network element configuration is used to determine in point 3-5 affected/involved network elements, i.e. the counterparts. Once the counterpart(s) have been determined, corresponding current network element configurations are retrieved (messages 3-6, 3-7) from the memory. In the illustrated example DXT-3 is determined in point 3-5, identified in message 3-6 and the current network element configuration of the DXT-3, comprising automatically generated network configurations is received in message 3-7.

The security entity configuration unit then defines in point 3-8 one or more sets of traffic rules for traffic between the network elements, using the received information and retrieved information, a set of traffic rules for each involved security entity. Further, in the illustrated example the security entity configuration unit filters in point 3-8 out each set of traffic rules that does not contain the updated information, and the remaining sets of traffic rules are then distributed (messages 3-9, 3-9') to corresponding security entities. In the illustrated example it is assumed that the IP address is part of traffic rules of firewalls, but not part of traffic rules of intrusion detection/prevention system devices. Therefore in the example the sets of traffic rules of IDPS1 and IDPS2 are filtered away, and updated sets of traffic rules of FW1 and FW2 are delivered to FW1 and FW2, correspondingly. By performing the filtering only those traffic rules are updated that needs to be updated. Hence communication resources and processing resources in the security entities are not used in vain. It should be appreciated that the filtering can be left out, and a set of traffic rules is sent to each security entity, regardless whether or not they remain the same.

The above examples describe a centralized solution for the security entity configuration unit, whereas the example illustrated in Figure 4 describes a distributed (decentralized) solution.

In the illustrated exemplary system 400 of Figure 4, a site 410 for a network element, such as a digital exchange or a base station, comprises in addition to the actual device, i.e. the network element (NE) 411, and the one or more security entities (S-E) 413 (only one illustrated in Figure 4) with its set of traffic rules (t.rules) 413f, a local security entity configuration unit (s-e-c-u) 412, and a memory 414, the memory comprising network element configuration (device configuration) 414-1. The network element configuration 414-1 comprises for example one or more IP addresses of the network element, usable protocols, ports to be used with various traffic flows, allowed packet sizes for traffic flows, and bandwidth characteristics for traffic flows. The network element configuration 414-1 comprises information on counterparts, such as IP addresses, protocols to be used and one or more ports. Further, the network element configuraion 414-1 may comprise information on the security entities on the site. It should be appreciated that in case the allowed packet sizes for traffic flows, bandwidth characteristics for traffic flows, and the packet sizes are symmetrical between counterparts, so there is no need to store them into memory also for counterparts. However, the allowed packet sizes for traffic flows, bandwidth characteristics for traffic flows, and/or the packet sizes to the network element and from the network element may be different, in which case they will be stored to the memory. For example, a digital exchange may transmit more traffic to a base station than what the base station transmits to the digital exchange. The local security entity configuration unit is configured to receive, or to detect when the network element 411 receives, from the network management system 420, network configuration related information and to use the received information and the network element configuration 414-1 in the memory to define, or create, or configure, sets of the traffic rules of the one or more security entities in the same site 410, as will be described in more detail below. The memory 414 and/or the local security entity configuration unit 412 may be integrated into the network element, as is the case in the example of Figure 4. For example, the local security entity configuration unit 412 may be an enhancement to a management agent within the network element. Alternatively, the memory 414 and/or the local security entity configuration unit 412 may be a separate unit/device.

Figure 5 illustrates an exemplary functionality of the local security entity configuration unit. In the illustrated example it is assumed that the network element configuration in the memory also comprises information on the counterparts, and information on the security entities on the site of the network element of the local security entity configuration unit. Further, it is assumed, for the sake of clarity, that one network configuration change at a time is delivered to the local security entity configuration unit. It is obvious for one skilled in the art how to implement the above procedure if a network configuration message contains more than one change.

Referring to Figure 5, network configuration information is received in step 501 from the network management entity. Therefore the network element configuration is retrieved in step 502 from the memory. Then it is checked in step 503, whether or not the network configuration information indicated that a new communication counterpart has been added. If not, it is checked in step 504, whether or not an existing communication counterpart has been removed. If not (step 504), then one or more parameters of the network element itself, or its communication counterpart have been amended, and one or more updated sets of traffic rules are defined, or created, in step 505 using the received updated one or more parameters and the retrieved network element configuration. The amount of created updated sets typically depends on how many security entities there are for the ne60twork element. However, the amount may be smaller. For example, if the security entity configuration unit is configured to associate a certain parameter type with only some of the security entities, and that kind of a parameter is updated, there is no need to create an updated set of traffic rules to each security entity. However, it should be appreciated that a set of traffic rules may be each time created to each security entity, even though the set of traffic rules would be the same as created during the previous update. Then the created one or more sets of traffic rules are sent in step 506 to corresponding one or more security entities.

If the network configuration information indicated that a new communication counterpart has been added (step 503), one or more new sets of traffic rules are determined (created) in step 507 using the received information and the retrieved network element configuration. Then the network element configuration in the memory is updated in step 508 to contain the added network element as a new counterpart, and the created one or more sets of traffic rules are sent in step 506 to corresponding one or more security entities.

If the network configuration information indicated that a communication counterpart has been removed (step 504), one or more sets of traffic rules to be removed are determined (created) in step 509 using the received information and the retrieved network element configuration. Then the network element configuration in the memory is updated in step 508 so that it does not any more contain the removed network element as a communication counterpart, and the one or more sets of traffic rules to be removed are sent in step 506 to corresponding one or more security entities, with the indication of removal.

Alternatively, new sets of traffic rules, for each not removed counterpart, is created in step 509, and the sets are sent to the security entities to replace the security configurations currently in use.

As can be seen from the above examples, defining the sets of traffic rules is facilitated by integrating the security configuration with network configuration. Thanks to the integration, the security configuration may be at least partly automated also for telecommunications networks. Since less manual work is needed, the risk for human errors is minimized. In addition, no extra work to be performed is needed to update the traffic rules to correspond evolvement of the network. Further, the traffic rules may be much more detailed. For example, the security entity configuration unit may be configured to update the sets of traffic rules in real time traffic flow -specifically.

Figure 6 illustrates an exemplary functionality of such real time updating. Although a network element, at least once it is added to a network, may have "blocked" as settings, i.e. allowing no traffic, including signaling, in the illustrated example the network element is "unblocked" in a way that signaling to and from it is allowed, but user data traffic is as a default not allowed. In other words, in the example of Figure 6 it is assumed that sets of traffic rules have been defined, the sets comprising as a default "not allowed" for all user data traffic. The sets of traffic rules may have been determined in any of the above described ways, or according to prior art solutions. In TETRA environment the prior art solution means that the traffic rules are defined by inputting manually the rules to corresponding security entities, or at least network element configurations of a network element and its counterparts, needs to be inputted to the system manually. In the example illustrated in Figure 6, the security unit performing the real time updating is the local security entity configuration unit that is further configured to monitor traffic flows. In the illustrated example it is assumed, for the sake of clarity, that a connection for the user data, called communication, is accepted and established.

Referring to Figure 6, when a communication set up request for a user data traffic is detected in step 601 in the network element of the local security entity configuration unit, the local security entity unit retrieves in step 602 the network element configuration from the memory. A communication set up request may be an initial connection set up request, a session establishment request, a handover request, or a request to speak and/or send data in push-to-talk kind of services in which a party of a communication is either in a receiving mode or in a transmitting mode, and a permission to transmit may be given by a system, for example by a server or other network element, once a party requests such a permission. When it is detected in step 603 that the communication set up request is accepted, one or more sets of user data traffic rules are created by the local security entity configuration unit in step 604 for the communication, i.e. for one or more traffic flows of the communication, using the network element configuration and routing information relating to the communication set up message, i.e. information on the network element and its counterparts, i.e. wherefrom the communication set up message was received, and whereto it was forwarded. Acceptance of a communication set up may be establishing a connection, establishing a session, or another indication of a start of a communication, for example "Floor taken" or "Floor grant" indicating start of a speech item in a push-to-talk like service. In the case of a group call, it may be possible that the communication set up is forwarded to two or more network elements if the group members are served by different network elements connected to the network element of the local security entity configuration unit thereby possibly involving more than one traffic flow per direction (to or from the network element of the local security entity configuration unit). Thinking of a digital exchange connected to one or more other exchanges and two base stations, a group call may require traffic flows to and from the both base stations and to and from at least one or more of the other exchanges, or the group call may require traffic flows to and from one base station and to and from one of the other exchanges. Thinking of a base station, a group call may require traffic flows to and/or from one or more user apparatuses and to and/or from a digital exchange. Thinking of a communication between two parties, the traffic flow(s) depends on whether or not they are served by the same base station, or base stations under the same exchange, or base stations under different exchanges. It should be appreciated that the above listed traffic flows are only examples and other kind of traffic flows may exist. Further, one communication requiring two or more traffic flows from/to the network element of the local security entity configuration unit may be mapped to traffic rules as two or more one-to-one traffic flows or as one-to-many. In other words, a very exemplified example of such traffic rules, from the network element, mapped as one-to-one includes "allow from port 1 to NE1, allow from port 1 to NE2" and mapped as one-to-many include "allow from port 1 to NE1 and to NE2". Correspondingly, an exemplified example of such traffic rules, to the network element, mapped as one-to-one includes "allow to port 1 from NE1, allow to port 1 from NE2" and mapped as one-to-many include "allow from port 1 to NE1 and to NE2".

Each created set of user data traffic rule is sent in step 605 to a corresponding security entity in the site to update the traffic rules so that user data can be transmitted over the connection. In other words, depending on the amount of "counterpart network element" of the connection, for each counterpart, and possible traffic direction (to and/or from the network element) a traffic rule "this specific user data traffic to this (these) port(s) in the network element from this (these) port(s) of this counterpart network element with the packet size(s) of X, and bandwidth characteristics of Y is allowed" and/or "this specific user data traffic from this (these) port(s) in the network element to this (these) port(s) of this counterpart network element with the packet size(s) of X', and bandwidth characteristics of Y' is allowed" is/are updated to the one or more security entities.

The local security entity configuration unit then monitors in step 606 the communication to detect ending (step 607) of the communication. The end may be due to a connection release, a session termination, a handover from the network element, or ending a permission to send, for example either by releasing voluntarily the transmission turn or being interrupted by a higher priority transmission. When it is detected (step 607) that the communication, or one of the communications (communication legs) in case of a group call or in case a user terminal moving to be served by another network element and/or another counterpart network element ending up with no party to be served, for example, is ended, the sets of user data traffic rules are updated in step 608 correspondingly. For example, the sets created in step 604 may be updated not to allow any user data traffic, or to allow a sub-set of the allowed user data traffic, or new sets, replacing the ones created in step 604, may be created. The updated traffic rules are then sent in step 609 to corresponding security entities.

Although in the above example functionality of a local security entity configuration unit was described, it should be appreciated that the above functionality may be performed by the centralized security entity configuration unit, which may provide updated sets of traffic rules to all involved security entities.

Further, it should be appreciated that instead of the security entity configuration unit monitoring traffic flows, the network element(s) and/or a server may be configured to inform the security entity configuration unit on traffic flows.

It should be appreciated that there are intermediate solutions between the above described centralized solutions and the distributed solution. For example, the initial determination of traffic rules may be performed using the centralized security entity configuration unit and updating the sets of traffic rules may be performed using the distributed security entity configuration unit. Further, the functionality described in Figure 6 may be implemented by a centralized security entity configuration unit with some involvement of a local security entity configuration unit, and/or at least some of the functionalities of the centralized security entity configuration unit described in Figures 2 and 3 may be implemented in a local security entity configuration unit.

Regardless the implementation details of the security entity configuration units, further triggers to update security settings may be provided by the log analyzer unit to the centralized security configuration unit and/or to the centralized security configuration controller and/or to the local security configuration unit.

Figure 7 is a flow chart illustrating an exemplary functionality of the log analyzer unit. In the illustrated example it is assumed that the log analyzer unit forwards information on suspicious traffic to the security entity configuration unit (centralized and/or local) to update one or more sets of traffic rules, which can be overcome only by the security entity configuration unit (local or centralized) determining new traffic rules replacing those created by the log analyzer, for example in response to receiving from NMS input that triggers updating one or more sets of traffic rules, described above, or by using prior art solutions to determine/update traffic rules.

Referring to Figure 7, the log analyzer unit receives in step 701 log files and corresponding event reports from network elements and analyzes in step 702 the received information, using the current network configuration, to detect suspicious activities. The received information contains IP-addresses, ports, type of packets, packet fingerprint, etc.. The log analyzer may comprise one or more rules based on which a suspicious activity is detected. For example, a rule may be that if a program N crashes X times within time period of Y in a network element, a suspicious activity is detected. Similar kind of rules may be determined for unknown connection attempts, incorrectly received packets, amount of messages sent from a network element, traffic flow characteristics differing from those in the network configuration, etc. It should be appreciated that the rules whose fulfilment indicate a suspicious activity may be defined freely; there are no restrictions or limitations. Further, in the illustrated example suspicious activity has been defined to have two levels: the less serious causing only alerts and the more serious causing also update of traffic rules. For example, suspicious affectivity that have lasted a certain amount of time may be first less serious but if it continues it may become more serious. It should be appreciated that there may be only one level or more than two levels, and the criteria for a level may be freely determined.

If no suspicious activity is detected (step 703), receiving the log information (step 701) and analyzing it (step 702) continues.

If a suspicious activity is detected (step 703), it is checked (704) whether or not the suspicious activity is so serious that it should be forwarded to the security entity configuration unit. If it is, affected one or more sites are determined in step 705 using the log information and the current network configuration information. Once the affected one or more sites, possibly also the affecting traffic, have been determined, they are delivered in step 706 to the security entity configuration unit or units, and in the illustrated example also NMS is also alerted. For example, NMS may be alerted that the suspicious activity will be taken into account in one or more sets of traffic rules. Alternatively, the log analyzer may be configured to only deliver information on the affected one or more sites and/or affecting traffic to the security entity configuration unit.

If the suspicious activity is not so serious that it should be forwarded to the security entity configuration unit (step 704), an alert is sent in step 707 to NMS.

While performing steps 704, 705, 706 and/or 707, and after them, receiving the log information (step 701) and analyzing it (step 702) continues in the background.

As is evident from the above, the log analyzer may cause that a traffic from a network element, configured to the network, may be blocked by updating one or more sets of the traffic rules because of abnormal behavior, thanks to the log analyzer unit sending the information to the security entity configuration unit. In other words, with the log analyzer unit and the security entity configuration unit, a dynamic and automatically reactive system may be provided. Further, once the log analyzer has the current network configuration information, i.e. the basic network configuration and the automatically generated network configuration, it most probably will create less false alarms.

It should be appreciated that some functionality of the centralized log analyzer unit may be performed in a decentralized manner.

The steps, points and messages (i.e. information exchange) and related functions described above in and with Figures 2, 3, 5, 6 and 7 are in no absolute chronological order, and some of the steps/points may be performed simultaneously or in an order differing from the given one. Other functions can also be executed between the steps/points or within the steps/points, and other information may be sent. For example, instead of having more complete network element configurations, each time such a more complete configuration is needed, it is obtained by retrieving the device type -specific traffic related configurations, and the network element configuration stored in the memory is the received network configuration information. A still further example includes updating the network element configuration in response to detecting an indication of a start of a communication (step 603) and in response to detecting end of the communication, and to update the sets of user data traffic rules (steps 604, 608) in response to an update in the network element configuration. Some of the steps/points or part of the steps/points can also be left out or replaced by a corresponding step/point or part of the step/point. For example, instead of the network manager informing the security entity, for example by messages 2-1, 3-1 and step 501, the security entity configuration unit may be configured to monitor the network manager or network configuration send from the network manager to one or more network elements, and in response to detecting a change in the network management configuration, trigger the process. Another example includes leaving out updating network element configuration in step 508.

The techniques described herein may be implemented by various means so that an apparatus/network node/network element configured to implement one or more functions/operations of a corresponding apparatus/network node/network element described above with an embodiment/example, for example by means of Figure 2 and/or Figure 3 and/or Figure 5 and/or Figure 6 and/or Figure 7, comprises not only prior art means, but also means for implementing the one or more functions/operations of a corresponding functionality described with an example, for example by means of Figure 2 and/or Figure 3 and/or Figure 5 and/or Figure 6 and/or Figure 7, and it may comprise separate means for each separate function/operation, or means may be configured to perform two or more functions/operations. For example, one or more of the means for one or more functions/operations described above and/or the security entity configuration unit and/or the log analyzer unit and/or the security entity controller unit may be software and/or software-hardware and/or hardware and/or firmware components (recorded indelibly on a medium such as read-only-memory or embodied in hard-wired computer circuitry) or combinations thereof. Software codes may be stored in any suitable, processor/computer-readable data storage medium(s) or memory unit(s) or article(s) of manufacture and executed by one or more processors/computers, hardware (one or more apparatuses), firmware (one or more apparatuses), software (one or more modules), or combinations thereof. For a firmware or software, implementation can be through modules (e.g., procedures, functions, and so on) that perform the functions described herein.

Figure 8 is a simplified block diagram illustrating some units for an apparatus 800 configured to be a network element or a corresponding entity configured to provide one or more sets of traffic rules and/or causing update of the one or more sets of traffic rules, comprising at least one of the security entity configuration unit and/or the log analyzer unit and/or the security entity controller unit, or otherwise configured to create and/or update and/or transmit, as described above for example by means of Figure 2 and/or Figure 3 and/or Figure 5 and/or Figure 6 and/or Figure 7, one or more sets of traffic rules and/or information based on which one or more sets of traffic rules may be created/updated, or some of the functionalities if functionalities are distributed in the future. In the illustrated example, the apparatus comprises an interface (IF) entity 801, or more than one interface entities 801, for receiving and transmitting information, an entity 802, or more than one entities 802, capable to perform calculations and configured to implement at least one of the security entity configuration unit and/or the log analyzer unit and/or the security entity controller unit described herein, or at least part of functionalities/operations described above, for example by means of Figure 2 and/or Figure 3 and/or Figure 5 and/or Figure 6 and/or Figure 7, as a corresponding unit or a sub-unit if distributed scenario is implemented, with corresponding algorithms 803, and memory 804, or more than one memories 804, usable for storing a computer program code required for at least one of the security entity configuration unit and/or the log analyzer unit and/or the security entity controller unit, or a corresponding unit or sub-unit, or for one or more functionalities/operations described above, for example by means of Figure 2 and/or Figure 3 and/or Figure 5 and/or Figure 6 and/or Figure 7, i.e. the algorithms for implementing the functionality/operations described above by means of Figure 2 and/or Figure 3 and/or Figure 5 and/or Figure 6 and/or Figure 7. The memory 804 is also usable for storing other possible information, like the current network configurations and/or network element configurations and/or the device type -specific traffic related configurations and/or criteria for suspicious activities. To summon up, the at least one memory 804 and the computer program code (software) 803 are configured, with the at least one processor (or corresponding entity) 802, to cause the apparatus 800 to carry out any one of the embodiments/examples described above at least partly.

In other words, an apparatus configured to be a network element or a corresponding entity configured to provide one or more sets of traffic rules and/or causing update of the one or more sets of traffic rules, is a computing device that may be any apparatus or device or equipment or node configured to perform one or more of corresponding apparatus functionalities described with an embodiment/example above and it may be configured to perform functionalities from different embodiments/examples. The security entity configuration unit and/or the log analyzer unit and/or the security entity controller unit, as well as corresponding units and sub-unit and other units, and/or entities described above with an apparatus may be separate units, even located in another physical apparatus, the distributed physical apparatuses forming one logical apparatus providing the functionality, or integrated to another unit in the same apparatus.

An apparatus configured to transmit, and/or an apparatus configured to receive synchronization information based on what is described above, may generally include a processor, controller, control unit, micro-controller, or the like connected to a memory and to various interfaces of the apparatus. Generally the processor is a central processing unit, but the processor may be an additional operation processor. Each or some or one of the units/sub-units and/or algorithms for functions/operations described herein may be configured as a computer or a processor, or a microprocessor, such as a single-chip computer element, or as a chipset, including at least a memory for providing storage area used for arithmetic operation and an operation processor for executing the arithmetic operation. Each or some or one of the units/sub-units and/or algorithms for functions/operations described above may comprise one or more computer processors, logic gates, application-specific integrated circuits (ASIC), digital signal processors (DSP), digital signal processing devices (DSPD), programmable logic devices (PLD), field-programmable gate arrays (FPGA), and/or other hardware components that have been programmed and/or will be programmed by downloading computer program code (one or more algorithms) in such a way to carry out one or more functions of one or more embodiments/examples. An embodiment provides a computer program embodied on any client-readable distribution/data storage medium or memory unit(s) or article(s) of manufacture, comprising program instructions executable by one or more processors/computers, which instructions, when loaded into an apparatus, constitute one or more of the units or an entity providing corresponding functionality. Programs, also called program products, including software routines, program snippets constituting "program libraries", applets and macros, can be stored in any medium and may be downloaded into an apparatus. In other words, each or some or one of the units/sub-units and/or the algorithms for one or more functions/operations described above may be an element that comprises one or more arithmetic logic units, a number of special registers and control circuits.

Further the apparatus may generally include volatile and/or non-volatile memory, for example EEPROM, ROM, PROM, RAM, DRAM, SRAM, double floating-gate field effect transistor, firmware, programmable logic, etc. and typically store content, data, or the like. The memory or memories may be of any type (different from each other), have any possible storage structure and, if required, being managed by any database management system. In other words, the memory may be any computer-usable non-transitory medium within the processor, or corresponding entity suitable for performing required operations/calculations, or external to the processor or the corresponding entity, in which case it can be communicatively coupled to the processor or the corresponding entity via various means. The memory may also store computer program code such as software applications (for example, for one or more of the units/sub-units/algorithms) or operating systems, information, data, content, or the like for the processor or the corresponding entity to perform steps associated with operation of the apparatus in accordance with examples/embodiments. The memory, or part of it, may be, for example, random access memory, a hard drive, or other fixed data memory or storage device implemented within the processor/apparatus or external to the processor/apparatus in which case it can be communicatively coupled to the processor/network node via various means as is known in the art. Examples of an external memory include a removable memory detachably connected to the apparatus, a distributed database and a cloud server.

The apparatus may generally comprise different interface units, such as one or more receiving units and one or more sending units. The receiving unit and the transmitting unit each provides an interface entity in an apparatus, the interface entity including a transmitter and/or a receiver or any other means for receiving and/or transmitting information, and performing necessary functions so that the information, etc. can be received and/or sent. The receiving and sending units/entities may be remote to the actual apparatus and/or comprise a set of antennas, the number of which is not limited to any particular number.

It will be obvious to a person skilled in the art that, as technology advances, the inventive concept can be implemented in various ways. The invention and its embodiments are not limited to the examples described above but may vary within the scope of the claims.

## Claims

1. A method comprising:
maintaining, by a security entity configuration unit (122), configuration information (121-1) and a set of device type -specific communication definitions (121-2) of one or more first network elements, wherein the set of device type - specific communication definitions comprises usable protocols, allowed packet sizes for traffic flows, and bandwidth characteristics for traffic flows;
receiving (2-1, 3-1, 501) in the security entity configuration unit a network management message from a network manager device, the network management message comprising network configuration information of at least a second network element, said network configuration information of the second network element in the network management message comprising at least indication of its type, one or more IP addresses of the second network element, one or more ports to be used with various traffic flows and some information on one or more communication counterparts among the one or more first network elements, wherein a communication counterpart is a network element the second network element is connected to;
using (2-3, 2-4, 2-5), by the security entity configuration unit, the set of device type -specific communication definitions to determine one or more network element configurations for the second network element and for the one or more communication counterparts;
defining (2-10, 3-8, 505, 507), by the security entity configuration unit, at least a set of traffic rules for each involved security entity connected to the second network element or to any of the one or more communication counterparts using the configuration information of the one or more communication counterparts and the received network configuration information of at least a second network element; and
sending (2-13, 2-13', 2-14, 2-14', 3-9, 3-9', 506) the set of traffic rules for an involved security entity from a security entity controller (130) to said involved security entity.

2. A method as claimed in claim 1, further comprising
defining, by the security entity configuration unit, at least part of the configuration information of the second network element from the set of device type -specific communication definitions.

3. A method as claimed in claim 1 or 2, wherein the set of traffic rules are sent to each involved security entity.

4. A method as claimed in claim 1 or 2, further comprising:
filtering, by the security entity configuration unit, each set of traffic rules that does not contain updated information; and
sending sets of traffic rules remaining after filtering from the security entity configuration unit to corresponding security entities.,.

5. A method as claimed in any preceding claim, further comprising:
using, in the configuration information of the first network element, a default value not allowing any user data traffic to and from the first network element;
updating (604), in response to detecting (603) an indication of a start of a communication to and/or from the first network element, the configuration information correspondingly;
updating (608), in response to detecting that the communication to and/or from the first network element is ended, the configuration information to use the default value;
updating (608), in response to an update of the configuration information, the set of traffic rules defined correspondingly; and
sending (609) the updated set of traffic rules to the security entity.

6. A method as claimed in claim 5, wherein the indication of the communication is an acceptance of a connection establishment, or a session establishment, or a permission to transmit user data or an acceptance of a handover.

7. A method as claimed in claim 5or 6, wherein the communication relates to a group communication involving at least at some point of the group communication two or more traffic flows to and/or from the first network element, the method comprising performing the updating of the set of traffic rules traffic flow - specifically.

8. A method as claimed in any preceding claim, further comprising:
receiving (701) log information comprising information on network traffic activities;
analyzing (702) the log information using the configuration information; and
in response to detecting, based on one or more rules defining when to detect a suspicious activity, a suspicious activity, causing (706) updating the set of traffic rules.

9. A method as claimed in claim 10, further comprising sending (707), in response to detecting the suspicious activity, an alarm to a network maintenance entity.

10. An apparatus (800) comprising means for carrying out the method according to any one of claims 1 to 9.

11. A system (100, 400) comprising at least one site (410) that comprises at least one apparatus (411) as claimed in claim 10, and one or more security entities (113-1, 113-2, 113-2, 113-4, 113-5, 413), each configured to receive one or more sets of traffic rules.

12. A system (100, 400) as claimed in claim 11, wherein the at least one apparatus (411) is a digital exchange and the security entities (113-1, 113-2, 113-2, 113-4, 113-5, 413) include a firewall and an intrusion detection and/or prevention system device.

13. A computer program product comprising computer program code configured to perform a method as claimed in any one of claims 1 to 9 when executed on an apparatus.

## Patentansprüche

1. Verfahren, umfassend:
Verwalten von Konfigurationsinformationen (121-1) und einem Satz gerätetypspezifischer Kommunikationsdefinitionen (121-2) eines oder mehrerer erster Netzwerkelemente durch eine Sicherheitseinheitskonfigurationseinheit (122), wobei der Satz gerätetypspezifischer Kommunikationsdefinitionen verwendbare Protokolle, zulässige Paketgrößen für Datenverkehrsströme und Bandbreiteneigenschaften für Datenverkehrsströme umfasst;
Empfangen (2-1, 3-1, 501) einer Netzwerkverwaltungsmeldung in der Sicherheitseinheitskonfigurationseinheit von einer Netzwerkverwaltungsvorrichtung, wobei die Netzwerkverwaltungsmeldung, die Netzwerkkonfigurationsinformationen mindestens eines zweiten Netzwerkelements umfasst, wobei die Netzwerkkonfigurationsinformationen des zweiten Netzwerkelements in der Netzwerkverwaltungsmeldung mindestens eine Angabe seines Typs, einer oder mehrerer IP-Adressen des zweiten Netzwerkelements, eines oder mehrerer Anschlüsse, die bei verschiedenen Datenverkehrsströmen zu benutzen sind, und Informationen über ein oder mehrere Kommunikationspartner unter dem oder den mehreren ersten Netzwerkelementen umfasst, wobei ein Kommunikationspartner ein Netzwerkelement ist, mit dem das zweite Netzwerkelement verbunden ist;
Verwenden (2-3, 2-4, 2-5) des Satzes gerätetypspezifischer Kommunikationsdefinitionen durch die Sicherheitseinheitskonfigurationseinheit, um eine oder mehrere Netzwerkelementkonfigurationen für das zweite Netzwerkelement und für den einen oder die mehreren Kommunikationspartner zu bestimmen;
Definieren (2-10, 3-8, 505, 507) mindestens eines Satzes von Datenverkehrsregeln für jede beteiligte Sicherheitseinheit, die mit dem zweiten Netzwerkelement oder mit einer von dem einen oder den mehreren Kommunikationspartnern verbunden ist, durch die Sicherheitseinheitskonfigurationseinheit anhand der Konfigurationsinformationen des einen oder der mehreren Kommunikationspartner und der empfangenen Konfigurationsinformationen mindestens eines zweiten Netzwerkelements; und
Senden (2-13, 2-13', 2-14, 2-14', 3-9, 3-9', 506) des Satzes von Datenverkehrsregeln für eine beteiligte Sicherheitseinheit von einer Sicherheitseinheitssteuerung (130) an die beteiligte Sicherheitseinheit.

2. Verfahren nach Anspruch 1, ferner umfassend:
Definieren mindestens eines Teils der Konfigurationsinformationen des zweiten Netzwerkelements aus dem Satz gerätetypspezifischer Kommunikationsdefinitionen durch die Sicherheitseinheitskonfigurationseinheit.

3. Verfahren nach Anspruch 1 oder 2, wobei der Satz von Datenverkehrsregeln an jede beteiligte Sicherheitseinheit gesendet wird.

4. Verfahren nach Anspruch 1 oder 2, ferner umfassend:
Filtern jedes Satzes von Datenverkehrsregeln, die keine aktualisierten Informationen enthalten, durch die Sicherheitseinheitskonfigurationseinheit; und
Senden von Sätzen von Datenverkehrsregeln nach dem Filtern von der Sicherheitseinheitskonfigurationseinheit an die entsprechenden Sicherheitseinheiten.

5. Verfahren nach einem der vorhergehenden Ansprüche, ferner umfassend:
Verwenden eines Vorgabewerts, der keinen Benutzerdatenverkehr von und zu dem ersten Netzwerkelement erlaubt, in den Konfigurationsinformationen des ersten Netzwerkelements;
Aktualisieren (604) der Konfigurationsinformationen in entsprechender Weise als Reaktion auf das Erkennen (603) einer Angabe eines Beginns einer Kommunikation zu und/oder von dem ersten Netzwerkelement;
Aktualisieren (608) der Konfigurationsinformationen, den Vorgabewert zu verwenden, als Reaktion auf das Erkennen, das die Kommunikation zu und/oder von dem ersten Netzwerkelement beendet ist;
Aktualisieren (608) des definierten Satzes von Datenverkehrsregeln auf entsprechende Weise als Reaktion auf eine Aktualisierung der Konfigurationsinformationen; und
Senden (609) des aktualisierten Satzes von Datenverkehrsregeln an die Sicherheitseinheit.

6. Verfahren nach Anspruch 5, wobei die Angabe der Kommunikation eine Annahme einer Verbindungsherstellung oder einer Sitzungsherstellung oder einer Erlaubnis zum Übermitteln von Benutzerdaten oder eine Annahme einer Übernahme ist.

7. Verfahren nach Anspruch 5 oder 6, wobei sich die Kommunikation auf eine Gruppenkommunikation bezieht, die mindestens an einem Punkt der Gruppenkommunikation zwei oder mehr Datenverkehrsströme zu und/oder von dem ersten Netzwerkelement beinhalten, wobei das Verfahren ein datenverkehrstromspezifisches Durchführen der Aktualisierung des Satzes von Datenverkehrsregeln umfasst.

8. Verfahren nach einem der vorhergehenden Ansprüche, ferner umfassend:
Empfangen (701) von Protokollinformationen, die Informationen über Netzwerkverkehrsaktivitäten umfassen;
Analysieren (702) der Protokollinformationen anhand der Konfigurationsinformationen; und
als Reaktion auf das Erkennen einer verdächtigen Aktivität auf der Grundlage einer oder mehrerer Regeln, die definieren, wann eine verdächtige Aktivität zu erkennen ist, Bewirken (706) der Aktualisierung des Satzes von Datenverkehrsregeln.

9. Verfahren nach Anspruch 10, ferner umfassend Senden (707) eines Alarms an die Netzwerkverwaltungseinheit als Reaktion auf das Erkennen der verdächtigen Aktivität.

10. Vorrichtung (800), umfassend Mittel zum Durchführen des Verfahrens nach einem der Ansprüche 1 bis 9.

11. System (100, 400), umfassend mindestens einen Standort (410), der mindestens eine Vorrichtung (411) nach Anspruch 10 umfasst, und eine oder mehrere Sicherheitseinheiten (113-1, 113-2, 113-3, 113-4, 113-5, 413), wobei jede dazu konfiguriert ist, einen oder mehrere Sätze von Datenverkehrsregeln zu empfangen.

12. System (100, 400) nach Anspruch 11, wobei die mindestens eine Vorrichtung (411) eine digitale Vermittlungsstelle ist und die Sicherheitseinheiten (113-1, 113-2, 113-3, 113-4, 113-5, 413) eine Firewall und eine Eindringerkennungs- und/oder -verhinderungssystemvorrichtung beinhalten.

13. Computerprogrammprodukt, umfassend Computerprogrammcode, der dazu konfiguriert ist, bei Ausführung auf einer Vorrichtung ein Verfahren nach einem der Ansprüche 1 bis 9 durchzuführen.

## Revendications

1. Procédé comprenant les étapes suivantes :
conserver, au moyen d'une unité de configuration d'entités de sécurité (122), des informations de configuration (121-1) et un ensemble de définitions de communication spécifiques au type de dispositif (121-2) d'un ou de plusieurs premier(s) élément(s) de réseau, dans lequel l'ensemble de définitions de communication spécifiques au type de dispositif comprend des protocoles utilisables, des tailles de paquets autorisées pour des flux de trafic et des caractéristiques de largeur de bande pour des flux de trafic ;
recevoir (2-1, 3-1, 501) dans l'unité de configuration d'entités de sécurité un message de gestion de réseau en provenance d'un dispositif gestionnaire de réseau, le message de gestion de réseau comprenant des informations de configuration de réseau d'au moins un second élément de réseau, lesdites informations de configuration de réseau du second élément de réseau dans le message de gestion de réseau comprenant au moins une indication de son type, une ou plusieurs adresse(s) IP du second élément de réseau, un ou plusieurs port (s) à utiliser avec divers flux de trafic et un certain nombre d'informations sur un ou plusieurs homologue(s) de communication parmi le ou les premier(s) élément(s) de réseau, dans lequel un homologue de communication est un élément de réseau auquel le second élément de réseau est connecté ;
utiliser (2-3, 2-4, 2-5), au moyen de l'unité de configuration d'entités de sécurité, l'ensemble de définitions de communication spécifiques au type de dispositif pour déterminer une ou plusieurs configuration(s) d'élément(s) de réseau pour le second élément de réseau et pour l'homologue ou les homologues de communication ;
définir (2-10, 3-8, 505, 507), au moyen de l'unité de configuration d'entités de sécurité, au moins un ensemble de règles de trafic pour chaque entité de sécurité impliquée, connectée au second élément de réseau ou à l'un quelconque de l'homologue ou des homologues de communication, à l'aide des informations de configuration de l'homologue ou des homologues de communication et des informations reçues de configuration de réseau d'au moins un second élément de réseau ; et
envoyer (2-13, 2-13', 2-14, 2-14', 3-9, 3-9', 506) l'ensemble de règles de trafic destinées à une entité de sécurité impliquée, depuis un contrôleur d'entités de sécurité (130) à ladite entité de sécurité impliquée.

2. Procédé tel que revendiqué dans la revendication 1, comprenant en outre l'étape suivante :
définir, au moyen de l'unité de configuration d'entités de sécurité, au moins une partie des informations de configuration du second élément de réseau, à partir de l'ensemble de définitions de communication spécifiques au type de dispositif.

3. Procédé tel que revendiqué dans la revendication 1 ou 2, dans lequel l'ensemble de règles de trafic est envoyé à chaque entité de sécurité impliquée.

4. Procédé tel que revendiqué dans la revendication 1 ou 2, comprenant en outre les étapes suivantes :
filtrer, au moyen de l'unité de configuration d'entités de sécurité, chaque ensemble de règles de trafic qui ne contient pas d'informations mises à jour ; et
envoyer les ensembles de règles de trafic restants après filtrage, depuis l'unité de configuration d'entités de sécurité à des entités de sécurité correspondantes.

5. Procédé tel que revendiqué dans l'une quelconque des revendications précédentes, comprenant en outre les étapes suivantes :
utiliser, dans les informations de configuration du premier élément de réseau, une valeur par défaut ne permettant aucun trafic de données d'utilisateur à destination et en provenance du premier élément de réseau ;
mettre à jour (604), en réponse à la détection (603) d'une indication de début de communication à destination et/ou en provenance du premier élément de réseau, les informations de configuration de façon correspondante ;
mettre à jour (608), en réponse à la détection du fait que la communication à destination et/ou en provenance du premier élément de réseau a pris fin, les informations de configuration pour utiliser la valeur par défaut ;
mettre à jour (608), en réponse à une mise à jour des informations de configuration, l'ensemble de règles de trafic définies de façon correspondante ; et
envoyer (609) l'ensemble mis à jour de règles de trafic à l'entité de sécurité.

6. Procédé tel que revendiqué dans la revendication 5, dans lequel l'indication de la communication est une acceptation d'établissement d'une connexion ou d'établissement d'une session ou une autorisation à transmettre des données d'utilisateur ou une acceptation de transfert intercellulaire.

7. Procédé tel que revendiqué dans la revendication 5 ou 6, dans lequel la communication se rapporte à une communication de groupe impliquant, au moins à un certain point de la communication de groupe, deux ou plus de deux flux de trafic à destination et/ou en provenance du premier élément de réseau, le procédé comprenant la réalisation de la mise à jour de l'ensemble de règles de trafic de façon spécifique aux flux de trafic.

8. Procédé tel que revendiqué dans l'une quelconque des revendications précédentes, comprenant en outre les étapes suivantes :
recevoir (701) des informations de journal comprenant des informations sur des activités de trafic sur le réseau ;
analyser (702) les informations de journal à l'aide des informations de configuration ; et
en réponse à la détection d'une activité suspecte sur la base d'une ou de plusieurs règle(s) définissant quand détecter une activité suspecte, provoquer (706) la mise à jour de l'ensemble de règles de trafic.

9. Procédé tel que revendiqué dans la revendication 10, comprenant en outre l'envoi (707), en réponse à la détection de l'activité suspecte, d'une alarme à une entité de maintenance du réseau.

10. Appareil (800) comprenant des moyens destinés à réaliser le procédé selon l'une quelconque des revendications 1 à 9.

11. Système (100, 400) comprenant au moins un site (410) qui comprend au moins un appareil (411) tel que revendiqué dans la revendication 10, et une ou plusieurs entité (s) de sécurité (113-1, 113-2, 113-3, 113-4, 113-5, 413), configurées chacune pour recevoir un ou plusieurs ensemble(s) de règles de trafic.

12. Système (100, 400) tel que revendiqué dans la revendication 11, dans lequel le au moins un appareil (411) est un commutateur numérique et les entités de sécurité (113-1, 113-2, 113-3, 113-4, 113-5, 413) incluent un pare-feu et un dispositif de système de détection et/ou de prévention des intrusions.

13. Produit-programme informatique comprenant un code de programme informatique conçu pour réaliser un procédé tel que revendiqué dans l'une quelconque des revendications 1 à 9, lorsqu'il est exécuté sur un appareil.
